# EUROPEAN PATENT APPLICATION

(11) **EP 4 756 586 A2**
(43) Date of publication of application: **10.06.2026**
(21) Application number: 25208830.7
(22) Date of filing: 15.10.2025
(51) Int. Cl.: G06F 3/041, G06F 3/044

(54) **IN-CELL TOUCH DISPLAY DEVICE AND OPERATION METHOD THEREOF**

(30) Priority: 05.12.2024 US 202463728156 P; 17.02.2025 TW 114105672
(71) Applicant: AmTRAN Technology Co., Ltd., New Taipei City 235038 (TW)
(72) Inventor: CHANG, Yenhsiang, 235038 New Taipei City (TW)
(74) Representative: Becker, Eberhard

(57) **Abstract**

Provided is an in-cell touch display device (10), which includes a display panel (100), a touch electrode (200) and a cover plate (300). The touch electrode (200) is disposed on the display panel (100), and includes a driving electrode (Tx) and a sensing electrode (Rx). The cover plate (300) is disposed on the touch electrode (200). The driving electrode (Tx) is away from the display panel (100) relative to the sensing electrode (Rx) in a top view direction (Z) of the in-cell touch display device (10). Also provided is an operation method of the in-cell touch display device (10).

## Description

### BACKGROUND

### Technical Field

The disclosure relates to an electronic device and an operation method thereof, and in particular relates to an in-cell touch display device and an operation method thereof.

### Related Art

Fingers and passive styli are commonly used as media for operating in-cell touch display devices. However, both have limitations in usage scenarios. For example, fingers and passive styli perform relatively poorly in terms of writing fluency and thickness of handwriting, thus relatively difficult to be used in writing or drawing scenarios. Based on this, the technology that utilizes an active stylus in conjunction with an in-cell touch display device has been developed.

However, during a display stage, a display driving signal transmitted to a display panel of the in-cell touch display device may easily interfere with a signal transmission between the active stylus and the in-cell touch display device, which may generate false signals due to noise interference, thereby increasing the load of touch operation and/or decreasing the accuracy of touch sensing, and other technical problems.

Moreover, when the Microsoft Pen Protocol is utilized in conjunction with the in-cell touch display device, a Bluetooth emitter needs to be matched. When an electromagnetic resonance stylus is utilized with the in-cell touch display device, a sensing plate arranged in a grid pattern needs to be embedded. This may cause design limitations and relatively high costs for the in-cell touch display device.

### SUMMARY

The disclosure provides an in-cell touch display device, which can reduce noise interference from a display panel, and has relatively flexible operation and/or relatively low cost.

The in-cell touch display device of the disclosure includes a display panel, a touch electrode, and a cover plate. The touch electrode is disposed on the display panel and includes a driving electrode and a sensing electrode. The cover plate is disposed on the touch electrode. In a top view of the in-cell touch display device, the driving electrode is positioned farther from the display panel relative to the sensing electrode.

In one embodiment of the disclosure, the driving electrode is positioned closer to the cover plate relative to the sensing electrode in the top view of the in-cell touch display device.

In one embodiment of the disclosure, the display panel is a liquid crystal display panel.

In one embodiment of the disclosure, the in-cell touch display device further includes a first adhesive layer, a second adhesive layer, and a third adhesive layer. The first adhesive layer is disposed between the display panel and the sensing electrode. The second adhesive layer is disposed between the sensing electrode and the driving electrode. The third adhesive layer is disposed between the driving electrode and the cover plate.

In one embodiment of the disclosure, the in-cell touch display device is operated through using an active stylus.

In one embodiment of the disclosure, the active stylus is implemented by a Microsoft Pen Protocol or an electromagnetic resonance stylus.

The disclosure provides a method for operating an in-cell touch display device, which can reduce noise interference from the display panel, and has relatively flexible operation and/or relatively low cost.

The method for operating the in-cell touch display device of the disclosure includes at least the following steps: a data voltage is applied to a display panel in the in-cell touch display device during a display stage, and when a first row of pixels of the display panel is driven, the data voltage drops from a first potential to a second potential.

In one embodiment of the disclosure, the first potential is 10V, and the second potential is 9V.

In one embodiment of the disclosure, the display panel includes a plurality of pixel units, and at least one of the multiple pixel units includes 8x8 pixel array.

In one embodiment of the disclosure, the first row of pixels includes pixels in a dark state.

Based on the above, in the in-cell touch display device provided by the disclosure, a technical issue of generating false signals between the active stylus and the in-cell touch display device due to noise interference may be reduced by adjusting a relative position between the driving electrode and the sensing electrode. In addition, in the operation method of the in-cell touch display device provided by the disclosure, a 5kHz harmonic frequency noise and a 25kHz harmonic frequency noise generated by the display panel may be decreased or eliminated by adjusting the data voltage. Since the method can suppress the noise generated by the display panel, the technical problem of generating false signals between the active stylus and the in-cell touch display device due to noise interference can also be reduced.

Moreover, the in-cell touch display device provided by the disclosure does not require to match a Bluetooth transmitter, and does not require embed a sensing plate arranged in a grid pattern. Based on this, the in-cell touch display device provided by the disclosure may have relatively flexible operability and/or relatively low cost.

### BRIEF DESCRIPTION OF THE DRAWINGS

FIG. 1 is a schematic partial cross-sectional view of an in-cell touch display device according to an embodiment of the disclosure.
FIG. 2A is a schematic partial top view of a display panel according to an embodiment of the disclosure.
FIG. 2B is a voltage waveform diagram of a pixel voltage of a display panel during a display stage according to an embodiment of the disclosure.
FIG. 2C shows a voltage waveform diagram of a noise signal generated by a display panel according to an embodiment of the disclosure and a noise signal generated by a display panel of the prior art.

### DESCRIPTION OF THE EMBODIMENTS

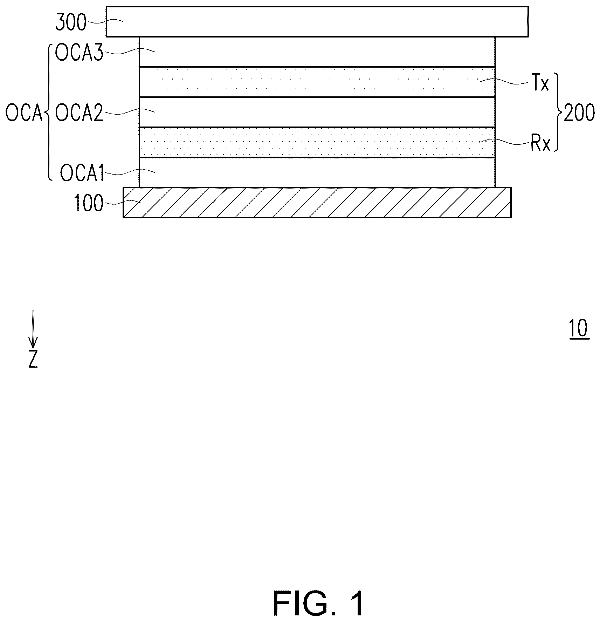

FIG. 1 is a partial schematic cross-sectional view of an in-cell touch display device according to an embodiment of the disclosure.

Please refer to FIG. 1. An in-cell touch display device 10 of the embodiment includes a display panel 100, a touch electrode 200, and a cover plate 300.

The display panel 100 may include, for example, a liquid crystal display panel, but is not limited thereto. In some embodiments, the display panel 100 includes a substrate (not shown), an element layer (not shown), and a display medium (not shown). The substrate of the display panel 100 may include, for example, a flexible substrate or a non-flexible substrate. A material of the substrate may include, for example, glass, plastic, or a combination thereof. For example, the substrate of the display panel 100 may include quartz, sapphire, polymethyl methacrylate (PMMA), polycarbonate (PC), polyimide (PI), polyethylene terephthalate (PET), or other appropriate materials or combinations of the foregoing materials, but the disclosure is not limited thereto. The element layer of the display panel 100 is, for example, disposed on the substrate and may include, for example, a circuit structure to drive the display medium. For example, the element layer of the display panel 100 may include multiple scan lines, multiple data lines, insulation layers, capacitors, multiple transistors and/or multiple electrodes, etc., but the disclosure is not limited thereto. In some embodiments, the element layer of the display panel 100 may include multiple traces without including transistors. The display medium of the display panel 100 may be, for example, disposed on the element layer. In the embodiment, the display medium of the display panel 100 includes liquid crystal molecules. The liquid crystal molecules may be rotated or switched by a vertical electric field or may be rotated or switched by a horizontal electric field, but is not limited thereto.

The touch electrode 200 is, for example, disposed on the display panel 100. In the embodiment, the touch electrode 200 includes a driving electrode Tx and a sensing electrode Rx, and may be electrically connected to a touch circuit (not shown). In detail, the touch electrode 200 may include the driving electrode Tx configured to apply a driving signal and the sensing electrode Rx configured to receive a sensing signal. In the embodiment, an active stylus (not shown, which may be, for example, a Microsoft Pen Protocol or electromagnetic resonance stylus) is utilized to operate the in-cell touch display device 10. When the active stylus contacts the cover plate 300 of the in-cell touch display device 10, the touch circuit may send a signal to the active stylus through the driving electrode Tx, and may receive a signal sent by the active stylus. In some embodiments, the signal sent by the touch circuit to the active stylus through the driving electrode Tx includes information of the display panel 100, and the signal received by the touch circuit from the active stylus includes information of the active stylus, but the disclosure is not limited thereto. The sensing electrode Rx may sense the signal transmitted by the touch circuit to the driving electrode Tx, and form a capacitance (mutual capacitance) together with the driving electrode Tx. In some embodiments, the driving electrode Tx and the sensing electrode Rx are individually disposed on different planes. In detail, an insulation layer (not shown) may be disposed between the driving electrode Tx and the sensing electrode Rx to implement mutual capacitance between the driving electrode Tx and the sensing electrode Rx.

The cover plate 300 is, for example, disposed on the touch electrode 200, for example, to protect the touch electrode 200 and the display panel 100. For example, the cover plate 300 may provide dust resistance, scratch resistance, and waterproofing to reduce the impact of the external environment on the touch electrode 200 and the display panel 100. The cover plate 300 may be light transmittance. In some embodiments, a material of the cover plate 300 may include glass. A type or a composition of the glass is not particularly limited, which may be, for example, aluminosilicate glass, lithium aluminosilicate glass, soda-lime silicate glass, quartz glass, or other light-transmitting glass, but the disclosure is not limited thereto. In other embodiments, the material of the cover plate 300 may include organic materials, which may be, for example, resin, acrylic, or other suitable organic materials.

In some embodiments, the in-cell touch display device 10 may further include an adhesive layer OCA to bond adjacent components together. In the embodiment, the adhesive layer OCA includes an adhesive layer OCA1, an adhesive layer OCA2, and an adhesive layer OCA3. The adhesive layer OCA1 is disposed between the display panel 100 and the sensing electrode Rx. The adhesive layer OCA2 is disposed between the sensing electrode Rx and the driving electrode Tx. The adhesive layer OCA3 is disposed between the driving electrode Tx and the cover plate 300. In some embodiments, the adhesive layer OCA may include an optical clear adhesive (OCA). For example, a material of the adhesive layer OCA may include acrylic resin, silicone resin, epoxy resin, or other appropriate materials or combinations of the foregoing materials, but the disclosure is not limited thereto.

In the embodiment, the driving electrode Tx is positioned closer to the cover plate 300 relative to the sensing electrode Rx along a top view direction Z of the in-cell touch display device 10, which may enhance the signal strength transmitted between the active stylus and the in-cell touch display device 10. In addition, in the embodiment, the driving electrode Tx is positioned farther from the display panel 100 relative to the sensing electrode Rx in the top view direction Z of the in-cell touch display device 10, which may reduce the interference caused by a data voltage (a pixel voltage) transmitted to the data lines (not shown) of the display panel 100 with a signal transmission between the active stylus and the in-cell touch display device 10. Through this design, the in-cell touch display device 10 of the embodiment may reduce the technical problem of generating false signals due to noise interference.

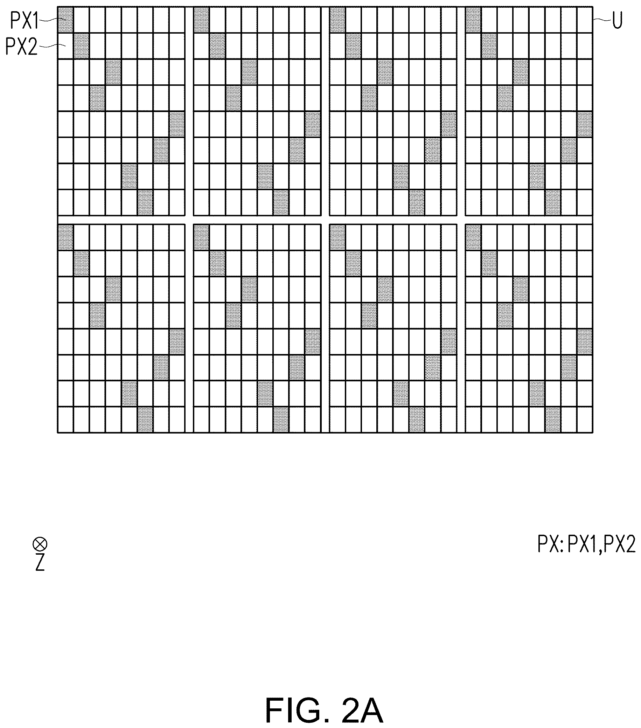

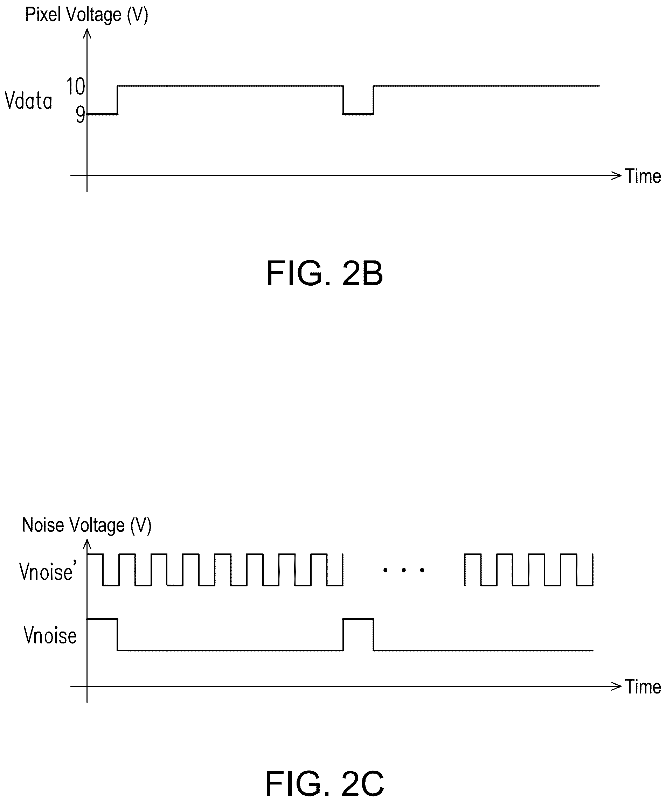

FIG. 2A is a partial schematic top view of a display panel according to an embodiment of the disclosure, FIG. 2B is a voltage waveform diagram of a pixel voltage of a display panel during a display stage according to an embodiment of the disclosure, and FIG. 2C shows a voltage waveform diagram of a noise signal generated by a display panel according to an embodiment of the disclosure and a noise signal generated by a display panel of the prior art.

Please refer to FIG. 2A. The display panel 100 of the embodiment may include multiple pixels PX. The multiple pixels PX are arranged in an array along a direction X and a direction Y. In the embodiment, a pixel unit U is composed of 8x8 pixels PX. In some embodiments, the display panel 100 may include a gate driving circuit (not shown). The gate driving circuit may include 8 shift registers (not shown) and 8 clock signal lines (not shown). Each of the shift registers is electrically connected to a corresponding clock signal line to individually receive a clock signal from the corresponding clock signal line, and then output a corresponding gate signal to the corresponding pixel PX in a pixel unit U by the clock signal. In other words, the shift registers of the embodiment take 8 stages as a cycle, but the disclosure is not limited thereto.

It is worth noting that FIG. 2A shows that the pixels PX may be pixels PX1 presented as a dark state and pixels PX2 presented as a bright state, but is not limited thereto. For example, the first row of pixels PX in the pixel unit U includes the pixels PX1 presented as a dark state.

In the embodiment, the display panel 100 may further include a source driving circuit (not shown). Please refer to FIG. 2B. During the display stage, the display panel 100 in the in-cell touch display device 10 may apply a data voltage Vdata to the data lines (not shown) through the source driving circuit. In the embodiment, when the first row of pixels PX in the pixel unit U is driven, the data voltage Vdata drops from a first potential to a second potential. When the second row of pixels PX to an eighth row of pixels PX in the pixel unit U are driven, the data voltage Vdata is maintained as the first potential. In the embodiment, the first potential is 10V, and the second potential is 9V, but is not limited thereto. By adjusting the data voltage Vdata, a 5kHz harmonic frequency noise and a 25kHz fixed-frequency noise generated by the display panel 100 may be decreased or eliminated. In detail, please refer to FIG. 2C. In the embodiment, through aforementioned method for operating the in-cell touch display device 10, a noise voltage Vnoise generated by the display panel 100 may reduce compared to a noise voltage Vnoise' generated by a display panel of the prior art.

Based on this, the embodiment may suppress the noise generated by the display panel 100 by adjusting the data voltage Vdata. By suppressing the noise generated by the display panel 100, interference with the signal transmission between the active stylus and the in-cell touch display device 10 may be reduced. With this design, the in-cell touch display device 10 of the embodiment may also mitigate the technical issue of generating false signals due to noise interference.

In summary, the in-cell touch display device provided in an embodiment of the disclosure, by adjusting the relative position between the driving electrode and the sensing electrode, the signal strength transmitted between the active stylus and the in-cell touch display device may be enhanced, and the interference caused by the data voltage transmitted to the data lines of the display panel with the signal transmitted between the active stylus and the in-cell touch display device may be reduced. Based on this, the in-cell touch display device provided in an embodiment of the disclosure may mitigate the technical issue of generating false signals between the active stylus and the in-cell touch display device.

In the operation method of the in-cell touch display device provided in an embodiment of the disclosure, through adjusting the data voltage, the 5kHz harmonic noise and the 25kHz fixed-frequency noise generated by the display panel may be decreased or eliminated, which may inhibit the noise generated by the display panel. Based on this, the operation method of the in-cell touch display device provided in an embodiment of the disclosure may reduce the technical problem of generating false signals between the active stylus and the in-cell touch display device.

Moreover, the in-cell touch display device provided by the disclosure may not need to match a Bluetooth emitter, and may not need to embed a sensing plate arranged in a grid pattern. Based on this, the in-cell touch display device provided by the disclosure may have relatively flexible operability and/or relatively low cost.

## Claims

1. An in-cell touch display device (10), comprising:
a display panel (100);
a touch electrode (200), disposed on the display panel (100), and comprising a driving electrode (Tx) and a sensing electrode (Rx); and
a cover plate (300), disposed on the touch electrode (200),
wherein the driving electrode (Tx) is positioned farther from the display panel (100) relative to the sensing electrode (Rx) in a top view of the in-cell touch display device (10).

2. The in-cell touch display device (10) of claim 1, further comprising:
a first adhesive layer, disposed between the display panel (100) and the sensing electrode (Rx);
a second adhesive layer, disposed between the sensing electrode (Rx) and the driving electrode (Tx); and
a third adhesive layer, disposed between the driving electrode (Tx) and the cover plate (300),
wherein the driving electrode (Tx) is positioned closer to the cover plate (300) relative to the sensing electrode (Rx) in the top view of the in-cell touch display device (10),
wherein the display panel (100) is a liquid crystal display panel.

3. The in-cell touch display device (10) of claim 1, wherein the in-cell touch display device (10) is operated by an active stylus.

4. The in-cell touch display device (10) of claim 3, wherein the active stylus supports a Microsoft Pen Protocol or is implemented by an electromagnetic resonance stylus.

5. An in-cell touch display device (10), comprising a display panel (100), wherein, during a display stage, a data voltage (Vdata) is applied to the display panel (100), and when a first row of pixels (PX) of the display panel (100) is driven, the data voltage (Vdata) drops from a first potential to a second potential.

6. A method for operating an in-cell touch display device (10), comprising at least the following steps:
applying a data voltage (Vdata) to a display panel (100) of the in-cell touch display device (10) during a display stage,
wherein when a first row of pixels (PX) of the display panel (100) is driven, the data voltage (Vdata) drops from a first potential to a second potential.

7. The method for operating the in-cell touch display device (10) of claim 6, wherein the first voltage potential is 10V, and the second voltage potential is 9V.

8. The method for operating the in-cell touch display device (10) of claim 6, wherein the display panel (100) comprises a plurality of pixel units (U), and at least one of the plurality of pixel units (U) comprises 8x8 pixels (PX).

9. The method for operating the in-cell touch display device (10) of claim 6, wherein the first row of pixels (PX) comprises pixels (PX1) that are presented as a dark state.
